# EUROPÄISCHE PATENTANMELDUNG

(11) **EP 2 296 351 A1**
(43) Veröffentlichungstag der Anmeldung: **16.03.2011**
(21) Anmeldenummer: 10181844.1
(22) Anmeldetag: 21.12.2001
(51) Int. Cl.: H04L 29/12, H04W 4/12, H04W 4/02

(54) **Kurzwahleinrichtung und -verfahren für Mobilfunktelefone**

(30) Priorität: 17.01.2001 DE 10101833
(62) Teilanmeldung aus: 01273450.5
(71) Anmelder: Vodafone Holding GmbH, 40213 Düsseldorf (DE)
(72) Erfinder: Kleier, Stephan, 40545, Düsseldorf (DE); Timphus, Frank, 40233, Düsseldorf (DE); Dinsing, Torsten, 50670, Köln (DE)
(74) Vertreter: Weisse, Renate

(57) **Zusammenfassung**

Die Erfindung betrifft eine Chipkarte (48) für Mobilfunktelefone (14) zur Authentifikation in einem Funknetz (10) mit einer Einrichtung zur Kurzwahl von Mobilfunkdiensten, wobei eine Anpassungseinheit (52) vorgesehen ist, die die einer Kurzwahl zugeordnete Rufnummer jeweils an die lokalen Funknetzgegebenheiten anpaßt. Weiterhin betrifft die Erfindung ein entsprechendes Mobilfunktelefon (14) mit einer Anpassungseinheit (52), die die einer Kurzwahl zugeordnete Rufnummer jeweils an die lokalen Funknetzgegebenheiten anpaßt. Schließlich betrifft die Erfindung ein Verfahren zum Wählen mit einer Kurzwahl eines Mobilfunkdienstes mittels eines Mobilfunktelefons (14), in das eine Chipkarte (48) zur Authentifizierung in einem Funknetz vorgesehen ist, wobei die einer Kurzwahl zugeordnete Rufnummer im Mobilfunktelefon (14) an unterschiedliche Funknetze angepaßt wird.

## Beschreibung

### Technisches Gebiet

Die Erfindung betrifft eine Chipkarte für Mobilfunktelefone zur Authentifikation in einem Funknetz mit einer Einrichtung zur Kurzwahl von Mobilfunkdiensten. Ebenso betrifft die Erfindung ein Mobilfunktelefon für Funknetze mit einer Einrichtung zur Kurzwahl von Mobilfunkdiensten und ein Verfahren zum Wählen mit einer Kurzwahl eines Mobilfunkdienstes mittels eines Mobilfunktrelefons, in das eine Chipkarte zur Authentifizierung in einem Funknetz vorgesehen ist.

### Stand der Technik

Mobilfunktelefone werden nicht nur zur Kommunikation zwischen zwei Gcsprächspartnem verwendet, sondern auch zum Versenden und zum Empfangen von Nachrichten genutzt. Diese Nachrichten können sowohl in Form von Sprach- als auch Textnachrichten vorliegen. Die Nachrichten können, wenn ein Mobilfunkteilnehmer nicht erreichbar ist, auf einer "Mailbox" hinterlegt werden. Eine Mailbox ist ein Sprach- und/oder Textspeicher. Diese Mailbox wird von den Netzwerkbetreibern angeboten. Er befindet sich in der Regel auf einem Server des Heimatnetzes des Mobilfunktelefons. Jeder Mobilfunkteilnehmer kann sich eine solche Mailbox bei seinem Funknetzanbieter einrichten und bei Bedarf von seinem Mobilfunktelefon aus die für ihn bestimmten Nachrichten abrufen. Hierzu wählt der Mobilfunkteilnehmer eine Nummer des Netzwerkbetreibers an, der ein individueller Nummerncode, in der Regel die eigene Telefonnummer, hinzugefügt wird.

Diese individuelle Mailbox-Nummer ist relativ lang und schlecht zu merken. Es gestaltet sich für den Anwender daher einfacher, wenn er nur eine Kurzwahl mit erheblich weniger Nummern zum Abruf seiner Mobilbox eingeben muß. Solche Kurzwahlen für Mobilfunktelefone sind hinlänglich bekannt. Sobald eine solche Kurzwahl eingegeben wird, wird eine dieser Kurzwahl zugeordnete längere Nummer angewählt. Die Zuordnung der Kurzwahlnummer einer längeren, insbesondere "Servicenummer", erfolgt auf Seite des Funknetzes, in der Regel in einem elektrischen Datenverarbeitungssystem.

So ein Kurzwahlverfahren ist derzeit mit MSC/HLR Implementation bekannt. MSC ist die englische Abkürzung für "Mobile Switching Center". Im folgenden werden die englischen Begriffe bzw. deren Abkürzungen weitestgehend beibehalten, da sie sich in dieser Branche als Quasi-Standards etabliert haben. Das MSC ist die Mobilfunkvermittlungsstelle. Vereinfacht ausgedrückt, vermittels die Mobilfunkvermittlungsstelle und stellt die Verbindung zwischen verschiedenen Teilnehmern her. Das HLR ist die englische Abkürzung für "Home Location Register", was soviel bedeutet, wie Standortverzcichnis. Das HLR speichert die Teilnehmerverhältnisse der mobilen Benutzer, wobei jedem Teilnehmer genau ein HLR zugeordnet ist.

Bei der MSC/HLR Implementation übersetzt das MSC mit Hilfe des HLRs die Kurzwahlnummer beispielweise in die lange Nummer der Mailbox. Dieses Verfahren funktioniert jedoch nur im Heimatnetz. Beim Roaming in ein anderes Mobilfunknetz kann dieses Verfahren mit MSC/HLR Implementation nicht funktionieren.

Roaming nach dem GSM-Standard (engl. Global System Mobile) heißt, daß sich der Mobilfunktelefonbenutzer innerhalb eines Funknetzes bzw. Landes bewegen kann. Wird ein Gebiet von einem Funknetzbetreiber nicht mehr abgedeckt, besteht in der Regel die Möglichkeit, sich in fremde Funknetze von anderen. Betreibern einzubuchen und von dort aus die Funknetzdienste zu nutzen. Dies geschieht normalerweise auch beim Wechsel in das Ausland.

Nachteil dieses Systems ist, daß es außerhalb des Heimatnetzes nicht mehr funktioniert, weil eine korrekte Zuordnung der Kurzwahl durch den Heimatnetzbetreiber nicht mehr gegeben ist.

Um dem Anwender trotzdem die Kurzwahl in einem Fremdnetz zu ermöglichen, werden der Kurzwahl Auslösekriterien beim Roaming hinzugefügt. Die MSC sendet dann die Kurzwahl an einen sogenannten "CAMEL-Server", ein Rechner, der die Übersetzung der Kurzwahl in die entsprechende Nummer vornimmt. Der CAMEL-Server sendet die übersetztc Nummer schließlich wieder an die MSC zurück.

Weiterhin ist das SIM Application Toolkit (SAT) bekannt. Mit SAT wird ein Standard innerhalb des GSM Netzes bezeichnet. Er erlaubt die Speicherung und Ausführung von Applikationen auf einer SIM-Karte (SmartCard/kleine Chipkarte), welche sich im Mobilfunklelefon befindet und persönliche Informationen über den Nutzer enthält.

Im allgemeinen definiert SAT ein Satz von Befehlen, die es einer Applikation auf der SIM-Karte ermöglichen, mit dem Mobilfunktelefon in standardisierter Form zu kommunizieren. Zusätzlich kann kryptogiaphische Funktionalität auf der SIM-Karte installiert werden, um z.B. bestimmte Nachrichten zu verschlüsseln oder zu unterschreiben. Die Mobile Digitale Signatur ist ein Beispiel für die Kombination von SAT mit bereits auf der SIM-Karte gespeicherten persönlichen Daten des Nutzers.

"Short Messaging Service" (SMS) ist ein Datendienst des GSM-Mobiltelefonnetzes. Mittlerweile hat er sich als Standard für den Nachrichtenaustausch in Form von Texten in Mobilfunknetzen etabliert. Damit sind Mobilfunknutzer und -betreiber gleichermaßen in der Lage, Textnachrichten von max. 160 Zeichen zu und von Mobiltelefonen zu senden. Die Nachricht wird dann im Mobilfunktelefon oder auf der SIM-Karte gespeichert und kann jederzeit wieder im Display angezeigt werden.

Die SMS Nachricht wird zur Übermittlung an eine SMS-Zentrale (SMS-Ccntcr/SMSC) gesendet. Vom SMSC erhält man die Empfangsbestätigung oder eine Fehlermeldung. Nachfolgend versucht dann das SMSC die Nachricht dem Empfänger zuzustellen. Dabei werden Nachrichten ebenfalls ins Ausland weitergeleitet, wenn dort ein GSM Netz verfügbar ist. Die Nachricht erreicht den Empfänger auch, wenn dieser sein Mobiltelefon ausgeschaltet hat oder sich in einem sogenannten Funkloch befindet. In diesem Fall wird die Nachricht bis zu maximal 48 Stunden zwischengespeichert. Eine kürzere Gültigkeitsdauer für eine Mitteilung kann vom Absender vorgegeben werden.

Im Funknetz des Fremdanbieters, also außerhalb des Heimatnetzes, liegt die Kurzwahl nicht vor, so daß diese Möglichkeit für den Mobilfunkteilnehmer nicht oder nur über einen CAMEL-Server gegeben ist. Hierbei werden aber immer zusätzliche Informationen benötigt, d.h., ein erhöhter Datenfluß ist erforderlich.

### Offenbarung der Erfindung

Aufgabe der Erfindung ist es daher, ein Verfahren bzw. eine Vorrichtung für Mobilfunktelefone zu schaffen, bei der die Kurzwahlnummer und das Kurzwahlvcrfahrcn unabhängig vom jeweiligen Netzanbieter ist, wobei möglichst wenig Daten zwischen MSC und Mobilfunktelefon ausgetauscht werden sollen.

Erfindungsgemäß wird die Aufgabe dadurch gelöst, daß bei einer Chipkarte für Mobilfunktelefone zur Authentifikation in einem Funknetz mit einer Einrichtung zur Kurzwahl von Mobilfunkdiensten der eingangs genannten Art eine Anpasaungseinheit vorgesehen ist, die die einer Kurzwahl zugeordnete Rufnummer jeweils an die lokalen Funlmetzgegebenhciten anpaßt.

Desweiteren wird die Aufgabe durch ein Mobilfunktelefon für Funknetze mit einer Einrichtung zur Kurzwahl von Mobilfunkdiensten der Eingangs genannten Art gelöst, bei dem eine Anpassungseinheit vorgesehen ist, die die Kurzwahl an die lokalen Funknctzgegebenheiten anpaßt.

Weiterhin wird die Aufgabe durch ein Verfahren zum Wählen mit einer Kurzwahl eines Mobilfunkdienstes der eingangs genannten Art gelöst, wobei die Kurzwahl im Mobilfunktelefon an unterschiedliche Funknetze angepaßt wird.

Die Erfindung beruht auf dem Prinzip, die einer Kurzwahl zugeordneten Nummer bzw. Servicenummer auf Seiten des Mobilfunktelefons ermitteln zu lassen. Dies geschieht am einfachsten mit bereits vorhandenen Mitteln, indem die Chipkarte bzw. das Mobilfunktelefon mit einer solchen Chipkarte derart modifiziert wird, daß sie immer die korrekte Servicenummer ermittelt und der Kurzwahl zuordnet.

In einer vorteilhaften Ausgestaltung der Chipkarte für Mobiltunktelefone erfolgt die Anpassung der Kurzwahl an die Funknetzgegebenheiten automatisch. Aber auch die manuelle Anpassung der Kurzwahl an die Funknetzgegebenheiten kann vorteilhaft sein. Dies kann in geeigneter Weise über die Bedienereinheit 49 (Tastatur, Anzeige) des Mobilfunktelefons beispielsweise mit einer Menüabfrage durchgeführt werden.

Vorteilhafterweise ist die erfindungsgemäße Chipkarte mit einem SIM-Application Toolkit ausgestattet. Dies bedeutet, daß die Chipkarte "intelligent" ist. Intelligent heißt in dem Zusammenhang, daß bestimmte Operationen selbständig ausgeführt werden können. Die Anpassungseinheit läßt sich in einer besonderen Ausgestaltung der Erfindung in das SIM-Application Toolkit integrieren.

In einer vorteilhaften Ausgestaltung des Mobilfunktelefons ist die Anpassungseinheit auf einer Chipkarte vorgesehen, die zur Authentifikation in einem Funknetz in das Mobilfunktelefon eingesetzt wird.

In einer vorteilhaften Ausgestaltung der Erfindung erfolgt die Umwandlung der Kurzwahl zur Anpassung an die Funknetzgegebenheiten über die Chipkarte. In einer bevorzugten Ausbildung des erfindungsgemäßen Verfahrens wird auf der Chipkarte ein SIM-Applicalion Toolkit mit einer Anpassungseinheit vorgesehen, welches die Umwandlung der Kurzwahl in die geeignete Nummer vomimmt.

Weilere Vorteile ergeben sich aus dem Gegegenstand der Unteransprüche.

### Kurze Beschreibung der Zeichnung

- Fig. 1: zeigt eine Prinzipskizze der Erfindung.
- Fig. 2: zeigt als Flußdiagramm eine Initialisierungsprozedur.
- Fig.3: zeigt als Flußdiagramm die Prozedur einer Reaktion der Applikation auf den Ortsereignisstatus.
- Fig.4: zeigt als Flußdiagramm Prozeduren von mobil erzeugten Anrufversuchen.
- Fig.5: zeigt einen Abschnitt der Prozedur zur Anrulkontrolle durch die Chipkarte.
- Fig. 6a-6c: zeigt die Verwendung des Kurzwahlmenüs.
- Fig. 7: zeigt eine Prozedur zum Empfang einer. "SMS-PP" oder einer normalen "SMS".
- Fig. 8: zeigt als Flußdiagramm eine Prozedur zur Serverfunktion.
- Fig.9: zeigt eine Prozedur des SMS-Servers.
- Fig. 10: zeigt prinzipiell das Anzeigenunenü zur Einstellung der Kurzwahlnummer eines Mobilfunktelefons.

### Bevorzugtes Ausführungsbeispiel

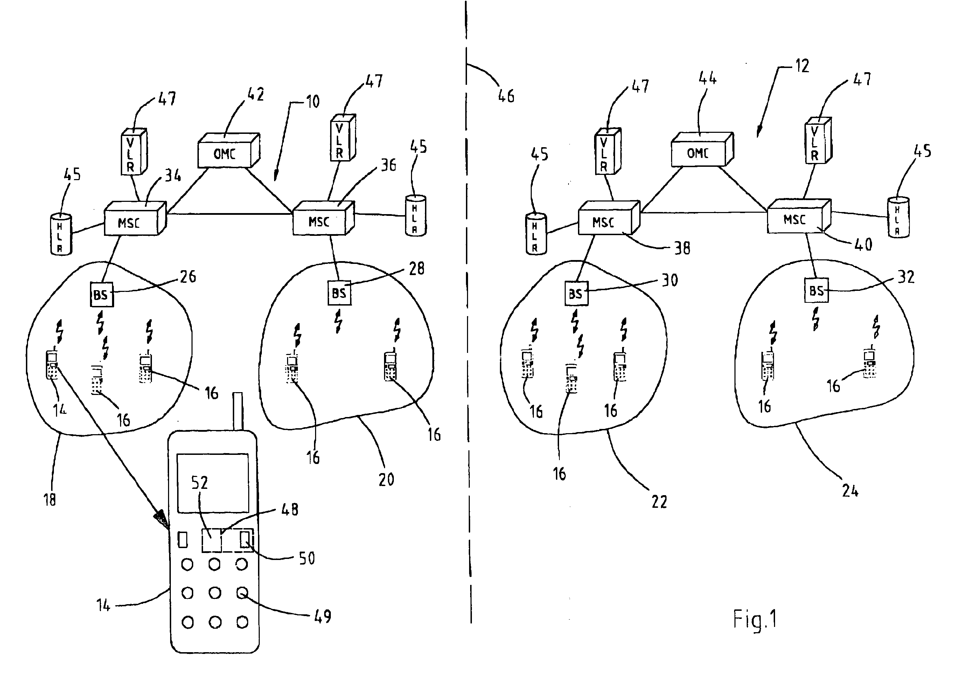

In Fig. 1 werden symbolisch zwei Ausschnitte unabhängiger Mobilfunknetze 10 und 12 dargestellt. Jedes der Mobilfunknetze 10 und 12 sitzt beispielsweise in einem anderen Land. Beide Mobilfunknetze 10, 12 sind Netze nach dem GSM-Standard. In vorliegendem Ausführungsbeispiel bildet das Mobilfunknctz 10 das Heimatnetz und das Mobilfunknetz 12 das Netz eines Fremdanbieters für ein Mobilfunktelefon 14. Das Mobilfunktelefon 14 wird daneben nochmals vergrößert dargestellt. Mit 16 werden weitere Mobilfunkteilnehmer bezeichnet. Die Mobilfunknetze 10, 12 werden aus Funkzellen 18, 20, 22, 24 gebildet. Beispielhaft werden für die Mobilfunknetze 10 und 12 jeweils nur zwei Funkzellen 18, 20 bzw. 22, 24 dargestellt. In jeder Funkzelle 18, 20, 22, 24 ist eine Basisstation (BS) 26, 28, 30, 32 vorgesehen. Jede Basisstation 26, 28, 30, 32 versorgt eine Zelle 18, 20 bzw. 22, 24. Die Basisstationen 26, 28, 30, 32 sind jeweils mit Mobilfunkvermittlungsstellen (MSC) 34, 36, 38, 40 verbunden. Die Mobilfunkvermittlungsstellen 34, 36, 38, 40 sind wiederum mit einem Betriebs- und Wartungssystem (OMC) 42, 44 gekoppelt. Die Mobilfunkvermittlungsstellen 34, 36, 38, 40 weisen jeweils Heimatregister (HLR) 45 und Gästeregister (VLR) 47 auf. Gestrichelte Linie 46 symbolisiert eine Funknetzgrenze, was oft auch eine Staatsgrenze ist.

In das vergrößert dargestellte Mobilfunktelefon 14 ist eine Chipkarte (SIM) 48 eingesetzt. Diese Chipkarte 48 dient zur Identifizierung und Authentifizierung in einem Mobilfunknetz 10, 12. Die Chipkarte 48 ist intelligent ausgelegt, d.h., sie ist in der Lage, bestimmte Aufgaben, wie beispielsweise Verschlüsselung oder Kompression von Daten, vorzunehmen. Diese Aufgabe wird von einem SIM-Application Toolkit (SAT) 50 auf der speziell dafür ausgelegten Chipkarte 48 für das Mobiltelefon 12 durchgeführt. Auf die genaue Beschreibung des SIM-Application Toolkits wird an dieser Stelle nicht näher eingegangen, da es ein ETSI/SMG-Standard (= European Telecommunications Standard Institute's Special Mobil Group) innerhalb des GSM-Standards ist. In dieses SIM-Application Toolkit wird eine Anpassungseinheit 52 für Kurzwahlen integriert. Das SIM-Application Toolkit 50 wird damit in die Lage versetzt, selbständig Kurzwahlnummern bestimmten Nummern, wie die einer Mailbox, in richtiger Weise zuzuordnen.

Das Wandern von einer Zelle 18 zu einer anderen Zelle 20 wird als "Roaming" bezeichnet. In GSM-Funknetzen besteht die Möglichkeit, von dem Funknetz 10 des einen zum Funknetz 12 des anderen Betreibers zu wechseln, ohne daß der Mobilfunkteilnehmer 14 bzw. auch 16 etwas davon merkt. Diese Überschreitung der Netzgrenze 46 wird mit Pfeil 54 angedeutet.

Jeder Mobilfunkteilnehmer 14, 16 kann sich eine individuelle "Mailbox" bei seinem Netzbctrciber einrichten lassen. Diese Mailbox ist eine Art Briefkasten, in dem sowohl Text als auch Sprachnachrichten hinterlassen werden können, wenn der Mobilfunkteilnehmer nicht erreichbar ist ― sei es durch ein Funkloch, oder daß das Mobilfunktelefon 14 einfach ausgeschaltet wurde. Die Mailbox befindet sich in der Regel im Heimatnetz 10. Der Mobilfunkteilnehmer kann bei Bedarf diese Mailbox bei seinem Netzbetreiber abfragen. Im Heimatnetz 10 wird dazu zunächst eine Nummer gewählt, der eine Nummer <yyyyyyyy>folgt. <xx> ist eine Nummer, mit der sich in das Mailboxsystem des Heimatnetzes eingebucht werden kann. <yyyyyyyy> ist die individuelle Nummer des Mobilfunkteilnehmers, meistens die Telefonnummer. Da es sich hierbei um relativ lange Nummern handelt, die über die Tastatur des Mobilfunktelefons eingegeben werden müssen, sind Kurzwahinummem vorgesehen. Für die Mailbox könnte beispielsweise die Nummer <zzz> eingegeben werden. Die Nummer <zzz> repräsentiert dann die gesamte Mäilboxrufnummer

Beim Überschreiten der Netzgrenze 46 stimmt die Mailboxrufnummer <yyyyyyyy> nicht mehr. Diese Nummer muß an das neue Netz angepaßt werden. Unter der Nummer <xx> <yyyyyyyyy> wird möglicherweise ein anderer Teilnehmer erreicht. Die Anpassung der Kurzwahlnummer wird in vorliegendem Ausführungsbeispiel selbständig von der Anpassungseinheit 52 des SIM Application Toolkits 50 vorgenommen. Die Anpassung wird nicht nur bei Mailbox-Diensten benötigt, sondern grundsätzlich bei allen Servicediensten, die im Heimalnetz angeboten werden und denen eine Kurzwahl zugeordnet wurde.

Um die richtige Rufnummer einer Kurzwahl zuordnen zu können, wird zunächst der Standort bzw. das Funknetz 10, 12 bestimmt und, falls es sich geändert hat, auf der Chipkarte 48 gespeichert. Über SMS. werden, sofern erforderlich, die notwendigen Informationen von der Vermittlungsstelle 44 eingeholt, die für die Änderung der Zuordnung "Kurzwahl- und Rufnummer" eines Dienstes gebraucht werden.

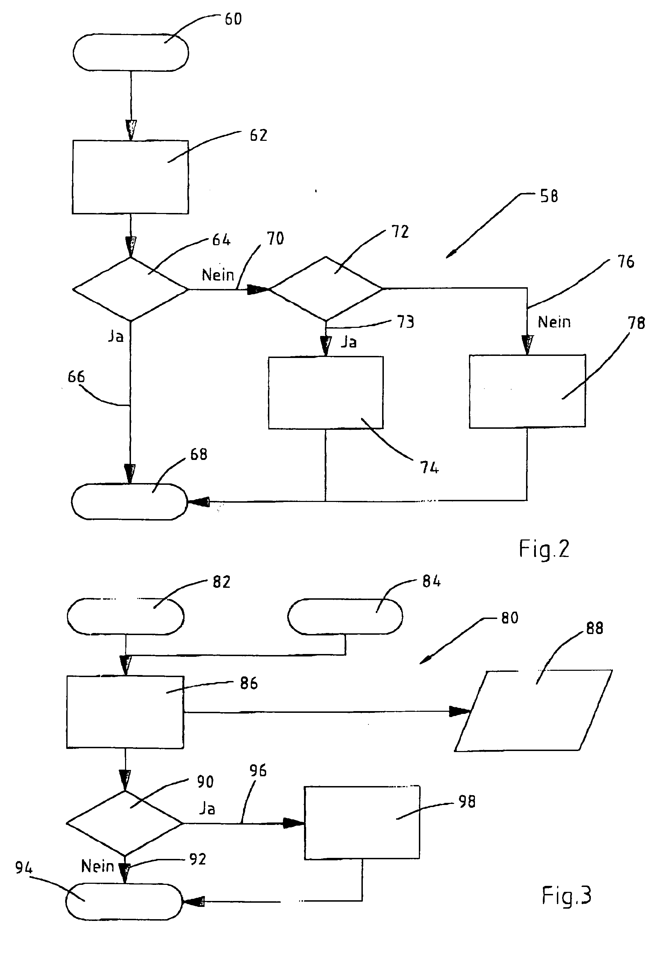

In den Figuren 2 bis 8 sind Beispiele von Prozeduren in Form von Flußdiagrammen dargestellt, wie sie in dem SIM Application Toolkit 50 enthalten sein können, um eine Zuordnung und Umwandlung der Rufnummern von Mobilfunkdiensten zu ermöglichen. In Fig. 2 wird eine Initialisierungsprozedur 58 dargestellt, die nach dem Einschalten des Mobilfunktelefons 14 aufgerufen wird. In dieser Initialisierungsprozedur 58 stellt Oval 60 den Prozedurenstart dar, wie er auf der Anzeige des Mobilfunktelefons 14 dargestellt wird. Der dann folgende Kasten 62 symbolisiert die Initialisierung des Mobilfunktelefons 14 sowie des SIM Application Toolkits 50. Anschließend folgt eine Raute 64. In der Raute 64 erfolgt eine Abfrage, ob eine Zufallszahl auf der Chipkarte vorhanden ist oder nicht. Ist irgend ein Zahlenwert <iiiiii> vorhanden, wird die Prozedur mit "JA", Pfeil 66, fortgeführt. Oval 68 symbolisiert den Abschluß der Routine. Ist kein Wert vorhanden, geht es mit "NEIN", Pfeil 70, weiter zu Raute 72 hin. Hier wird abgefragt, ob ein Ortsereignis vorliegt. Wenn ein Ortsereignis vorliegt, Pfeil 73, wird der Ortsereignisstatus registriert, Kasten 74. Die Prozedur wird hiernach mit Oval 68 abgeschlossen. Liegt kein Ortsereignis vor, Pfeil 76, so werden Anzeichen zur Verwendung der Anzeige angezeigt, Kasten 78. Danach wird die Prozedur mit Oval 68 abgeschlossen.

Fig. 3 ist eine Routine 80 als Flußdiagramm, welche die Reaktion der Applikation auf den Ortsereignisstatus behandelt. Oval 82 ist der Menüpunkt Ortsereignis, wie er auf der Anzeige des Mobilfunktelefons 14 dargestellt wird. Oval 84 ist die Menüaktualisierung. Von den Ovalen 82 und 84 führt die Prozedur in Kasten 86. Dieser Kasten 86 symbolisiert die Erzeugung und Speicherung einer Zufallszahl <RN> auf der Chipkarte 48. Diese Zufallszahl <RN> und eine Identifizierung für den Gebrauch eines Universalnummerndienstes <UN> werden an einen Kurzwahlserver per SMS gesandt, Kasten 88. Die Zufallszahl <RN> wird später zur Identifizierung bei einer korrespondierenden Antwort vom SMS=Server herangezogen. Auf den Prozedurabschnitt des Kasten 86 folgt ferner eine Abfrage, ob ein Ortscrcignis verfügbar ist, Raute 90. Wenn kein Ortsereignis vorhanden ist, wird die Prozedur mit "NEIN", Pfeil 92, fortgeführt und in Oval 94 beendet. Liegt ein Ortsereignis vor, wird die Routine mit "JA", Pfeil 96, zu Kasten 98 fortgeführt. Hier wird die Ereignisliste gelöscht, um anschließend die Prozedur in Oval 94 zu beenden.

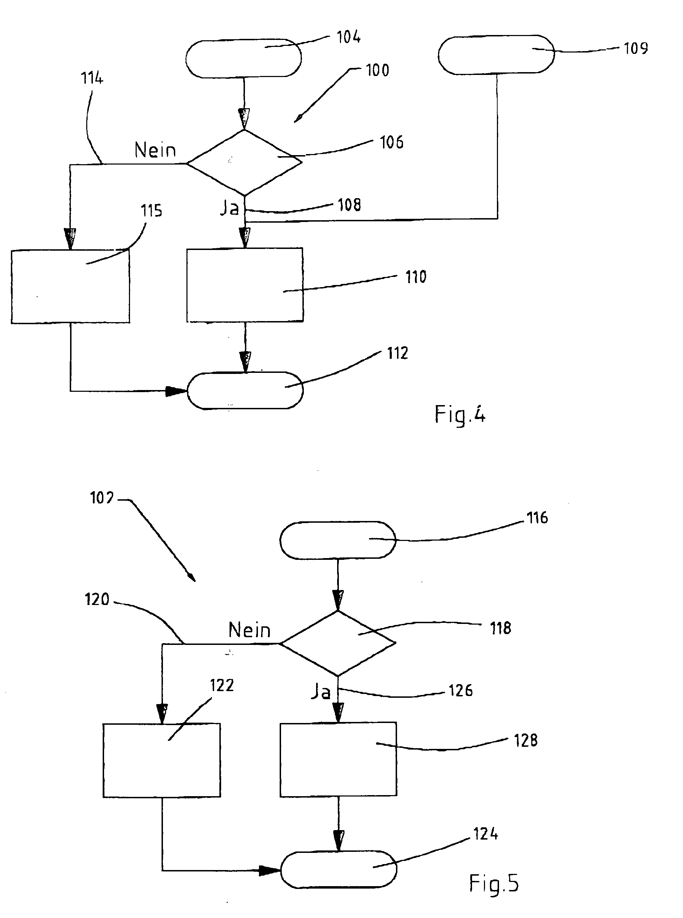

Die Prozeduren 100 und 102, die in Fig. 4 und 5 als Flußdiagramme abgebildet sind, behandeln die Anrufkontrolle durch die Chipkarte 48. Oval 104 symbolisiert den Menüpunkt Anrufaufbau. Von Oval 104 führt die Prozedur in Raute 106. Hier wird abgefragt, ob die Nummer der Servicenummer entspricht. Wenn die Nummer einer Servicenummer entspricht, wird die Verzweigung "JA" gewählt, Pfeil 108. Gegebenenfalls können an dieser Stelle Menü gesteuerte Änderungen durchgeführt werden, Oval 109. Anschließend wird der Anrufaufbau über Ansage-Post-System (VMN) durchgeführt, Kasten 110. Von da wird die Routine in Oval 112 beendet. Entspricht die Nummer nicht der Servicenummer, wird von Raute 108 über den Abzweig "NEIN", Pfeil 114, verzweigt. Kasten 115 symbolisiert den Anrufaufbau ohne Änderungen. Anschließend wird die Routine mit Oval 112 beendet.

Mit Oval 116, der Menüpunkt zur Rufversendung, startet die Routine 102. Es wird in Raute 118 geprüft, ob die Nummer einer Servicenummer entspricht. Falls die Nummer der Kurzwahl nicht entspricht, wird in "NEIN" verzweigt, Pfeil 120. Die Rufversendung erfolgt dann ohne Modifikationen, Kasten 122. Anschließend ist die Prozedur beendet. Ergibt die Prüfung jedoch, daß die Nummer der Kurzwahl entspricht, wird von Raute 118 in "JA" verzweigt, Pfeil 126. Danach erfolgt die Rufversendung mit einer Versandnummer, Kasten 128. Darauf wird die Routine mit Oval 124 beendet.

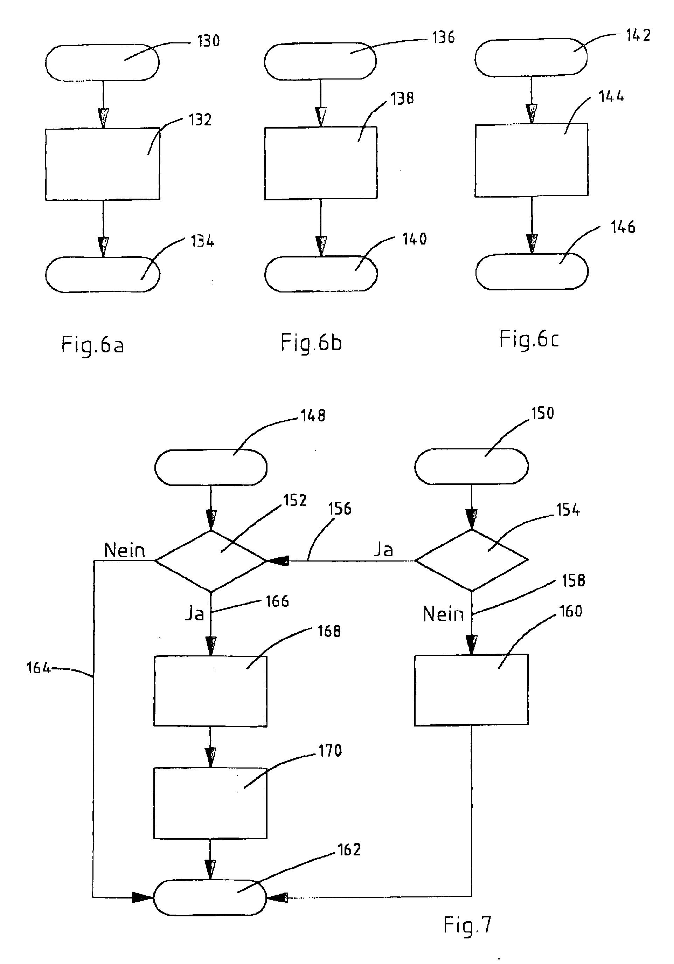

Die Figuren 6a bis 6c zeigen die Verwendung des Kurzwahlmenüs. Oval 130 symbolisiert in Fig. 6a den Menüpunkt "Einschalten". Von hier aus wird eine Zeichenfolge mit der Servicenummer versandt, Kaslen 132. Dann wird die Prozedur in Oval 134 beendet. Oval 136 symbolisiert in Fig. 6b den Menüpunkt "Ausschalten". Von hier aus wird eine Zeichenfolge versandt, Kasten 138. Dann wird die Prozedur in Oval 140 beendet. Ferner symbolisiert in Fig. 6c das Oval 142 den Menüpunkt "Eingang bearbeiten". Von hier wird eine Prozedur "Bearbeiten des gewählten Eingangs" aufgerufen, Kasten 144. Anschließend wird die Routine in Oval 146 beendet.

Fig. 7 beschreibt eine Prozedur, die den Empfang einer SMS-PP (Punkt-zu-Punkt Datenaustausch mit SMS) - Oval 148 - oder den Empfang einer normalen "SMS" - Oval 150 - einleitet. Auf das einleitende Oval 150 folgt die Abfrage, ob die SMS mit einer Kurzwahlnummer gestartet wird, Raute 154. Ergibt die Antwort "NEIN, wird in Pfeil 158 verzweigt. Eine Reaktion ist hier nämlich nicht erforderlich, wenn das SMSC (=Short Message Service Center) die Verwaltung der Kurzwahlinitialisierungsanfrage vornimmt und eine SMS-PP versendet. Die SMS kann gespeichert werden, Kasten 160. Danach ist dieser Prozedurabschnitt beendet, Oval 162. Wird die Abfrage mit "JA" beantwortet, so verzweigt Raute 154 in Pfeil 156, wo sich die nächste Abfrage, Raute 152, anschließt. Die Raute 152 symbolisiert die Abfrage, ob die auf der Chipkarte 48 gespeicherte Zufallszahl RN_{rec} der Zufallszahl RN_{md} in der SMS entspricht. Wenn die Zufallszahlen RN_{rec} und RN_{and} sich nicht entsprechen, wird in "NEIN" verzweigt, Pfeil 164. Hier wird schließlich die Prozedur mit Oval 162 beendet. Entspricht die Zufallszahl RN_{rec} der Zufallszahl RN_{and}, so setzt ein Speichervorgang ein, in dem die Eingänge MSISDN (= Mobilfunkteilnehmer ISDN), SC (=Service Code), VMN (=voice-mail-system), FN (=Versende-Nummer) auf der Chipkarte 48 gespeichert werden, Kasten 168. Weiterhin wird die Zahl als Zufallszahl RN auf der Chipkarte 48 gespeichert, Kasten 170. Danach wird die Prozedur mit Oval 162 abgeschlossen.

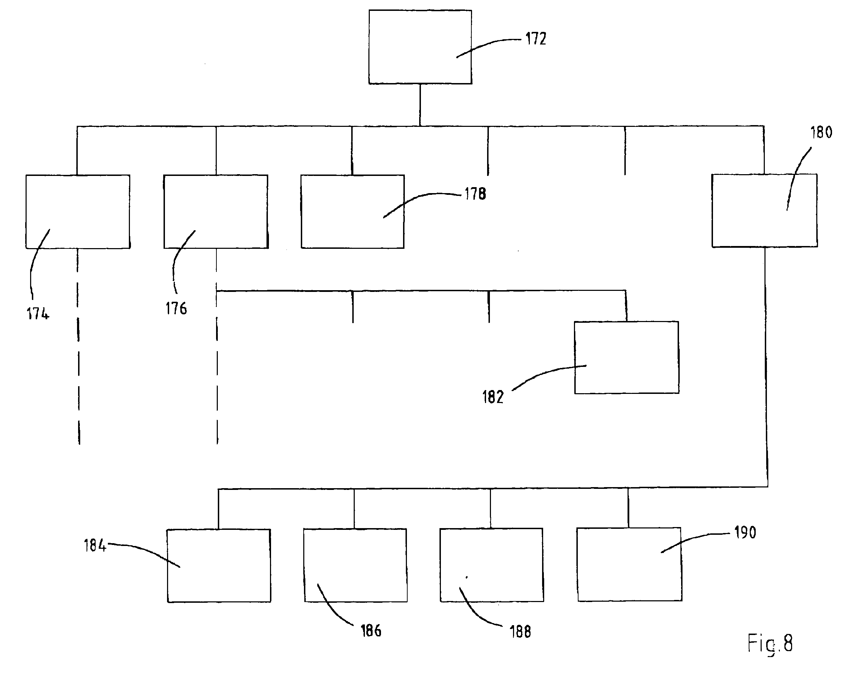

Die von der Kurzwahlanwendung erforderlichen Daten und Datenstrukturen werden in Fig. 8 in einem Kurzwahllevel abgebildet. Den elementaren Dateien "EF" und Variablen sind noch keine Werte zugeordnet. Sie werden während einer "GSM-Sitzung" von der SAT-Anwendung gelöscht. Leere Bytes werden auf den Hexadezimalwert "FF" gesetzt.

Dateien werden in dieser Abbildung als Kästen dargestellt. Im obersten Level bezeichnet Kasten 172 eine Datei MF, die an Adresse "3F00" steht. Kasten 172 setzt sich wiederum aus weiteren Dateien zusammen:
1.74 bezeichnet eine Datei DF_{GSM} mit der Adresse "7F20". 176 bezeichnet Datei DF_{TELECOM} mit der Adresse "7F10". 178 ist Datei DFₗₛ₋₄₁ mit der Adresse "7F22". Datei DF_{scn} folgt als letztes in diesem Level, Kasten 180. Weniger wichtige Dateien, d.h. für diese Anwendung, werden in dieser Darstellung lediglich mit Strichen angedeutet. Dic Datei 176 enthält wiederum Dabei EF_{MSISDN} mit der Adresse "8F40", Kasten 182. Die Datei DF_{SCD} ― Kasten 180 setzt sich aus den Dateien EF_{RN}=Zufallsnummer ― Kastcn 184, EF_{sc}=Sevice Code - Kasten 186, EF_{UN}= Universalnummer ― Kasten 188, EF_{SCDNR} =Kurzwahlnummer ― Kasten 190 zusammen.

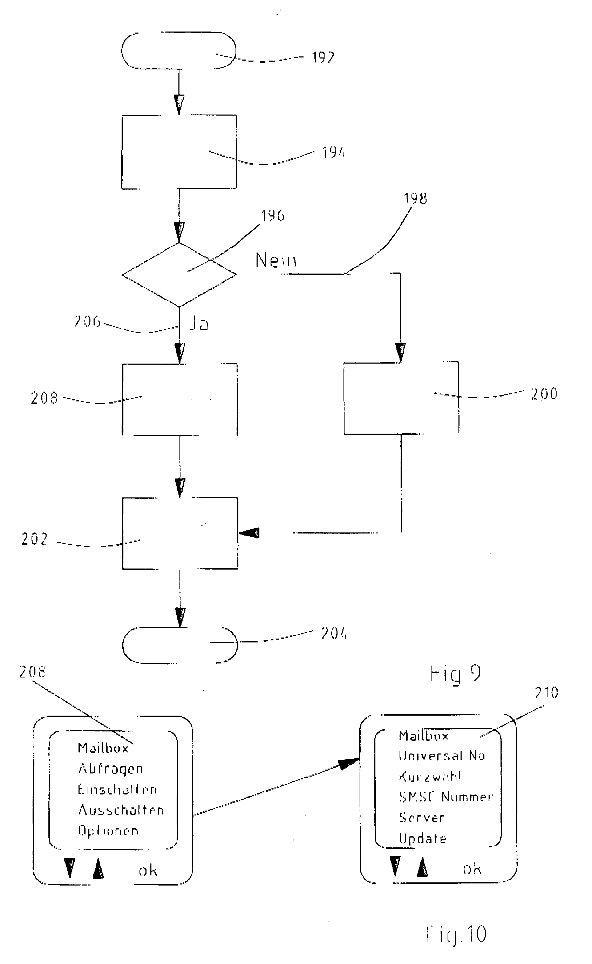

Fig. 9 zeigt die Prozedur des SMS-Servers. Oval 192 bezeichnet den Menüpunkt "Empfang einer SMS". Empfangene Daten werden aus der SMS herausgezogen, Kasten 194. Es schließt sich danach die Abfrage an, ob die Universalnummer den Wert Null hat, Raute 196. Im Falle, daß die Universalnummer einen anderen Wert als Null hat, wird in Pfeil 198 verzweigt. Pfeil 198 folgt Kasten 200. Kasten 200 symbolisiert die Funktionen, daß die Voice-Mail-Nummer (VMN) auf die Rufnummer +4917x555N und die Absendenummer (FN) auf die Rufnummer +4917x5005N gesetzt werden. Anschließend wird eine SMS erzeugt und versendet, Kasten 202. Mit Oval 204 wird die Prozedur beendet. Wenn die Universalnummer ungleich Null ist, wird über Pfeil 206 in Kasten 208 verzweigt. Kasten 208 symbolisiert die Funktionen, daß die Voice-Mail-Nummer (VMN) auf die Rufnummer +4917x555N und die Absendenummer (FN) auf die Rufnummer +4917x5005N gesetzt werden. Anschließend wird eine SMS erzeugt und versendet, Kasten 202. Mit Oval 204 wird die Prozedur beendet.

In Fig. 10 wird beispielhaft auf einer Anzeige 208 ein Menü eines Mobilfunktelefons gezeigt. Dieses Menü wird unter dern Menüpunkt "Optionen" in das Menü, wie es auf der daneben abgebildeten Anzeige 210 dargestellt ist, verzweigt.

## Patentansprüche

1. Chipkarte (48) für Mobilfunktelefone (14) zur Authentifikation in einem Funknetz (10) mit einer Einrichtung zur Kurzwahl von Mobilfunkdiensten, **dadurch gekennzeichnet, daß** eine Anpassungseinheit (52) vorgesehen ist, die die einer Kurzwahl zugeordnete Rufnummer jeweils an die lokalen Funknetzgegebenheiten anpaßt.

2. Chipkarte (48) für Mobilfunktelefone (14) nach Anspruch 1, **dadurch gekennzeichnet, daß** die Anpassung der Kurzwahl an die Funknetzgegebenheiten automatisch erfolgt.

3. Chipkarte (48) für Mobilfunktelefone (14) nach einem der Ansprüche 1 oder 2, **dadurch gekennzeichnet, daß** die Anpassung der Kurzwahl manuel erfolgt.

4. Chipkarte (48) für Mobilfunktelefone (14) nach einem der Ansprüche 1 bis 3, **dadurch gekennzeichnet, daß** ein SIM-Application Toolkit vorgesehen ist.

5. Chipkarte (48) für Mobilfunktelefone (14) nach Anspruch 4, **dadurch gekennzeichnet, daß** die Anpassungseinheit (52) in das SIM-Application Toolkit integriert ist.

6. Mobilfunktelefon (14) für Funknetze mit einer Einrichtung zur Kurzwahl von Mobüfunkdiensten, **dadurch gekennzeichnet, daß** eine Anpassungseinheit (52) vorgesehen ist, die die einer Kurzwahl zugeordnete Rufnummer jeweils an dic lokalen Funknetzgegebenheiten anpaßt.

7. Mobilfunktelefon (14) nach Anspruch 6, **dadurch gekennzeichnet, daß** die Anpassungseinheit auf einer Chipkarte (48) vorgesehen ist, die zur Authentifikation in einem Funknetz in das Mobilfunktelefon (14) eingesetzt wird.

8. Verfahren zum Wählen mit einer Kurzwahl eines Mobilfunkdienstes mittels eines Mobilfunktelefons (14), in das eine Chipkarte (48) zur Authentifizierung in einem Funknetz vorgesehen ist, **dadurch gekennzeichnet, daß** die einer Kurzwahl zugeordnete Rufnummer im Mobilfunktelefon (14) an unterschiedliche Funknetze angepaßt wird.

9. Verfahren zum Wählen mit einer Kurzwahl eines Mobilfunkdienstes mittels Mobilfunktelefon (14) nach Anspruch 8, **dadurch gekennzeichnet, daß** eine Umwandlung der Kurzwahl zur Anpassung an die Funknetzgegebenheiten über die Chipkarte (48) erfolgt.

10. Verfahren zum Wählen mit einer Kurzwahl eines Mobilfunkdiensles mittels Mobilfunktelefon (14) nach Anspruch 9, **dadurch gekennzeichnet, daß** auf der Chipkarte (48) ein SIM-Application Toolkit mit einer Anpassungseinheit (52) vorgesehen wird, welches die Anpassung der Rufnummer an die zugeordnete Kurzwahl vornimmt.
